# EUROPÄISCHE PATENTSCHRIFT

(11) **EP 0 957 681 B1**
(45) Veröffentlichungstag und Bekanntmachung des Hinweises auf die Patenterteilung: **14.03.2001**
(21) Anmeldenummer: 98905319.4
(22) Anmeldetag: 20.01.1998
(51) Int. Cl.: A01K 11/00

(54) **IDENTIFIKATIONSSYSTEM FÜR SCHLACHTVIEH**
IDENTIFICATION SYSTEM FOR ANIMALS FOR SLAUGHTER
SYSTEME D'IDENTIFICATION POUR BETES D'ABATTOIR

(30) Priorität: 28.01.1997 DE 19703027
(43) Veröffentlichungstag der Anmeldung: 24.11.1999
(73) Patentinhaber: ESKA KUNSTSTOFFTECHNIK GMBH & CO.,, 65366 Geisenheim (DE)
(72) Erfinder: WEISS, Susanne, D-67578 Gimbsheim (DE); GRUNDEI, Hans, D-23558 Lübeck (DE)
(74) Vertreter: Fuchs Mehler Weiss & Fritzsche
(86) Internationale Anmeldenummer: EP9800281
(87) Internationale Veröffentlichungsnummer: WO9832329

(56) Entgegenhaltungen:
- WO-A-85/04551
- WO-A-92/02126
- WO-A-93/11661
- NL-A- 8 702 889

## Beschreibung

Die Öffentlichkeit ist seit einiger Zeit in hohem Maße beunruhigt darüber, daß Rinder von der Rinderseuche BSE befallen werden und daß dieses Fleisch für den menschlichen Genuß in den Handel kommen könnte bzw. möglicherweise schon gekommen ist mit noch weitgehend unbekannter Wirkung auf den menschlichen Körper. In diesem Zusammenhang sei erinnert an die ca. 15 Todesfälle in Großbritannien im Jahre 1996, die auf die modifizierte Creutzfeldt-Jakob-Krankheit zurückgeführt werden, welche wiederum in Zusammenhang mit BSE gebracht wird. Die wirtschaftlichen und politischen Folgen sind bekannt: Importstop für britisches Rindfleisch, politische Verwerfungen innerhalb der EU und auch auf dem europäischen Kontinent ein dramatischer Rückgang des Rindfleischverbrauchs mit wiederum bekannten Folgen für die Erzeugerbetriebe, um nur einige zu nennen.

Zwar hat die Europäische Union gewisse Gebote und Verbote hinsichtlich des Handels mit vor allem britischen Rindfleisch erlassen und auch einige Kontrollmaßnahmen eingeleitet. So zählen neben den Herdbüchern auch die bekannten Ohrenmarken zum Teil eines Überwachungssystems, das sicherstellen soll, daß die gemeinschaftsrechtlichen und auch die nationalen Gesetze eingehalten werden.

Daß dies möglicherweise jedoch nicht immer der Fall ist, hat in jüngster Vergangenheit ein Fall in Deutschland gezeigt: Bekanntermaßen ist ein angeblich in Deutschland geborenes Gallowayrind an BSE verendet. Nach alledem, was bislang bekannt geworden ist, könnte an der Ohrmarke dieses Rindes manipuliert worden sein, d.h. diese könnte vor dem Weiterverkauf von einem Rinderzüchter zum nächsten ausgetauscht worden sein. Eine Rückverfolgung bis hin zum Heimatstall ist in diesem Fall de facto nicht möglich.

Aus der US-A-5,526,772 ist ein System zur Identifizierung von Tieren bekannt, bei welchem ein elektronischer Transponder subkutan in ein Bein des zu überwachenden Tieres implantiert wird. Daten, die im Transponder abgelegt sind, können abgescannt werden durch einen geeigneten Detektor. So leicht allerdings der Transponder implantierbar ist, so leicht kann er bei Manipulationen auch wieder entfernt werden, ohne daß dies augenfällig wird. Daher bietet dieses System keine Sicherheit gegenüber Manipulationsversuchen.

Ein anderes Verfahren zur Kennzeichnung von wiederkäuenden Tieren, vornehmlich Rindern, ist bekannt geworden aus der DE-A-43 17 340. In dieser Druckschrift wird vorgeschlagen, daß ein elektronischer Transponder in einer Kapsel untergebracht wird, welche vom Tier verschluckt und in dem Pansen dauerhaft untergebracht werden soll. Auch dieses Verfahren bietet gegenüber Manipulationsversuchen keine Sicherheit. Erschwerend kommt noch hinzu, daß der Transponder aus dem Pansen des Rindes in den übrigen Verdauungstrakt gelangen könnte und so verlustig gehen könnte.

Aus der WO-A-93/11661 ist ein Codeträger eines Identifikationssytems für Tiere bekannt, bei welchem ein sogenannter Transponder in einer Kapsel aus vorzugsweise biokompatiblem Glas untergebracht ist und gemäß einer Ausführungsform eingeschweißt ist in einer Folie aus Teflon. An der Peripherie weist diese Teflonfolie Löcher auf, durch welche hindurch Gewebematerial von beiden Seiten zusammenwachsen soll. Bei Bewegung des Tieres tendiert die dünne Teflonfolie im Bereich der Löcher dazu, die durch Nachwachsen entstandenen Fasern von einer Seite der Folie zur anderen Seite der Folie aufgrund einer Messerwirkung zu durchtrennen, so daß die Migrationstendenz des Implantates im Tierkörper nie vollständig unterbunden werden kann.

Vor diesem Hintergrund ist es nun die Aufgabe der vorliegenden Erfindung, ein Identifikationssystem der vorgenannten Art für Schlachtvieh anzugeben, bei dem die Migrationstendenzen des Codeträgers im Tierkörper unterbunden werden.

Gelöst wird diese Aufgabe durch ein Identifikationssystem gemäß dem Anspruch 1 mit weiteren vorteilhaften Ausgestaltungen gemäß den Unteransprüchen.

Demgemäß ist vorgesehen, daß das erfindungsgemäße Identifikationssystem wenigstens einen elektronischen Codeleser sowie einen elektronischen Codeträger umfaßt, wobei allerdings der Codeträger als eine in den Tierkörper implantierbare Einheit ausgebildet ist und wobei der Codeleser zur Erkennung des im Codeträger abgelegten Codes von extern her die Elektronik des Codeträgers mit elektrischer Energie versorgt, derart, daß dieser auf Aufforderung hin über eine drahtlose Informationsstrecke den abgelegten Code zur weiteren Auswertung und Anzeige an den Codeleser abgibt, wobei die Oberfläche der Codeträgereinheit zumindest teilweise mit einer offene Maschen ausbildenden Schicht bedeckt ist.

Die Kommunikation zwischen dem Codeträger und dem Codeleser läuft im Prinzip ab wie bei bekannten Transpondersystemen, wie sie im technischen Bereich beispielsweise zum Einsatz kommen bei Parksystemen, bei denen eine Parkkarte als Codeträger Daten wie Parkhaus- und Benutzerkenndaten abspeichert. Beim Herausfahren aus dem Parkbereich wird diese Parkkarte in eine dafür vorgesehene Leseeinheit gesteckt, woraufhin diese gegebenenfalls nach Freigabe eine Parkschranke öffnet, damit der Benutzer des Parkhauses aus diesem herausfahren kann (EP-A-613 103). Der erfindungswesentliche Kern im vorliegenden Falle liegt in der implantierbaren Ausbildung des Codeträgers. Die implantierbare Codeträgereinheit gemäß dem ersten Lösungsvorschlag ist dabei so ausgebildet, daß ihre Oberfläche zumindest teilweise mit einer Hinterschnitte und/oder offene Maschen ausbildenden Schicht bedeckt ist.

Es wird in Aussicht genommen, das zu kennzeichnende Tier sofort nach der Geburt, beispielsweise durch einen Amtsveterinär mit dem Codeträger zu versehen, indem an geeigneter Körperstelle eine kleine Öffnung vorgenommen wird, der Codeträger unter die Haut geschoben wird und die Wunde beispielsweise mit einem Wundklammerer verschlossen wird.

Nach kurzer Zeit heilt die Wunde ab. Damit ist das Tier zeit seines Lebens eindeutig gekennzeichnet und identifizierbar. Vor der Implantation des Codeträgers muß dieser allerdings in einer geeigneten elektronischen Schreibstation mit den gewünschten und erforderten Daten gespeist werden. Diese Daten können den Geburtsort, den Geburtstag, die Herdenzugehörigkeit, einen Code für den Erzeugerbetrieb, etc. umfassen. Der Amtsveterinär kann diese Daten beispielsweise an der mit einem Computer versehenen Schreibstation eingeben und über die drahtlose Informationsstrecke in den Codeträger einlesen.

Der Codeträger hat im übrigen den Vorteil, daß er die Daten behält, selbst wenn er sich im stromlosen Zustand befindet. Dies macht es nämlich überflüssig, eine Stromquelle mit in den Tierkörper zu implantieren. Vielmehr wird der Codeträger bei Bedarf von extern durch den Codeleser mit elektrischer Energie versorgt, die den Codeträger in die Lage versetzt, auf Anforderung hin seine abgespeicherten Daten an den Codeleser zu senden.

Es wird in Aussicht genommen, den Codeträger an normierter Körperstelle für jede Tierart zu implantieren, damit beispielsweise im Schlachtbetrieb das dort tätige Personal den Codeträger ohne weiteres auffinden kann und die Daten auslesen und auswerten kann. Der Codeleser kann ein Handgerät sein. Es ist jedoch auch möglich, den Codeleser als stationäre Einheit im Schlachtbetrieb aufzustellen an einer Stelle, welche die Tiere ohnehin passieren. Sollte ein Tier angetroffen werden, welches keinen Codeträger mit sich trägt oder aber ersichtlich ist, daß an dem Tier manipuliert worden ist, derart, daß das Tier an der besagten normierten Stelle eine vom üblichen abweichende Narbe aufweist, kann in dem Schlachtbetrieb ein Alarmsignal ausgelöst werden, was zur Folge hat, daß das betreffende Tier nicht in die menschliche Nahrungskette geschleust wird.

Die Informationsstrecke vom Codeträger zum Codeleser kann induktiver Art sein. Bevorzugt allerdings wird eine vorteilhafte Weiterbildung, bei der der Codeträger ein berührungslos arbeitendes Identifikations- und/oder Kommunikationselement mit einer elektromagnetische Wellen abstrahlende Datenübertragungseinrichtung umfaßt. Dementsprechend verfügt der Codeleser ebenso wie der Codeträger über einen Sender und Empfänger. Dies erhöht die Datenübertragungssicherheit deutlich.

Durch die erwähnte Ausbildung der Schicht des Codeträgers wird die Manipulationssicherheit gegenüber bekannten Systemen noch entscheidend erhöht, da nämlich durch die offenen Maschen Bindegewebe wachsen kann, welches im Falle eines Manipulationsversuches so ohne weiteres nicht unbemerkt herausgeschnitten werden kann, ohne daß nicht äußere Merkmale nach der Verheilung der Wunde erkennbar sind. Es ist auch möglich, die offene Maschen aufweisende Oberfläche der Codeträgereinheit auf einen Knochen zu setzen, wonach dann Knochentrapekel durch die offenen Maschen hindurchwachsen können und so für einen praktisch nicht mehr lösbaren Verbund zwischen der Codeträgereinheit und dem Knochen des Tieres gesorgt ist.

Diese Ausführungsform wird noch dadurch weitergebildet, daß die Oberflächenschicht mehrschichtig ausgebildet ist mit in räumlicher Tiefe abnehmender Maschenweite. Hierdurch kann der Veterinär feststellen, wie lange das Implantat sich bereits im Tierkörper befindet. Die ersten Einwachsungen in die Maschen treten bereits nach mehreren Tagen auf. Eine vollständige Durchwachsung ist in etwa 6 bis 8 Wochen nach der Implantation zu erwarten. Wenn nun die besagte Schicht aus drei Lagen unterschiedlicher Maschenweiten besteht, kann der ungefähre Implantationszeitpunkt dadurch nachvollzogen werden, indem festgestellt wird, wieviele der Lagen bereits durch Bindematerial oder aber Knochentrapekel durchwachsen sind. Diese Beobachtung kann korreliert werden mit den im Codeträger abgelegten Geburtsdaten. Bei großen Abweichungen steht somit fest, daß an dem Tier manipuliert worden ist.

Eine andere Möglichkeit besteht darin, wenn die Codeträgereinheit aus Kunststoffmaterial besteht, daß die Oberflächenschicht mehrschichtig ausgebildet ist, wobei die verschiedenen Schichten unterschiedlich gefärbt sind. Auch hier läßt sich in einfacher Weise die Anzahl der durchwachsenen Schichten feststellen und aufgrund von Erfahrungswerten auf den etwaigen Implantationszeitpunkt rückschließen.

Die Erfindung wird anhand eines Ausführungsbeispiels gemäß den Zeichnungsfiguren näher erläutert. Hierbei zeigt:
- Fig.1: schematisch das Identifikationssystem, wobei der Codeträger einem Rind eingesetzt worden ist, und
- Fig. 2: die Ansicht (a) einer Codeträgereinheit an einem Röhrenknochen sowie die Ansicht der Einheit von unten (b).

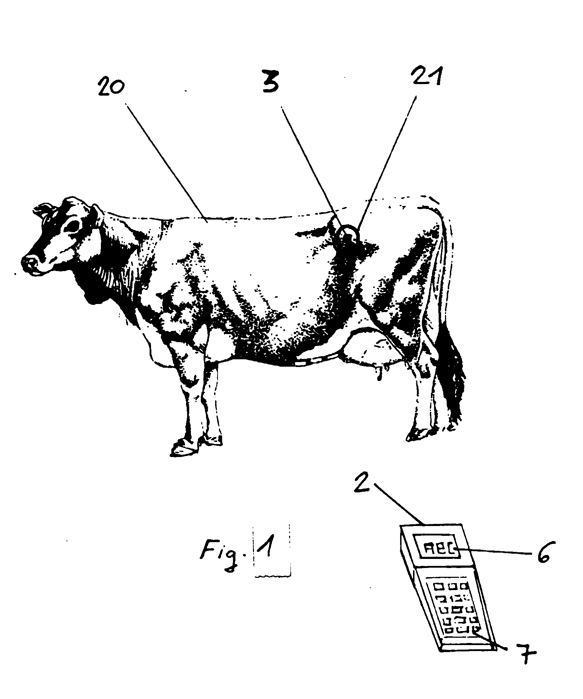

Fig.1 veranschaulicht schematisch das gesamte Identifikationssystem. Vorliegend ist der Codeleser 2 als Handgerät dargestellt mit einer Zifferanzeige 6 und einem Tastaturfeld 7. Über das Tastaturfeld 7 kann beispielsweise der Veterinär Steuercodes an den Codeträger 3 senden, der vorliegend in das Tier 20 im Bereich des Hüftgelenks 21 implantiert ist. Die Steurcodes veranlassen den Codeträger 3, die in ihm abgelegten Daten zurück an den Codeleser 2 zu senden, wobei der Codeträger 3 während dieses Vorganges vom Codeleser 2 mit elektrischer Energie versorgt wird, beispielsweise durch eine induktive Koppelung, bei der der Codeleser 2 in einen Umkreis von etwa 40 cm vom Codeträger 3 gebracht werden muß, damit die Koppelung und die Energieübertragung greift.

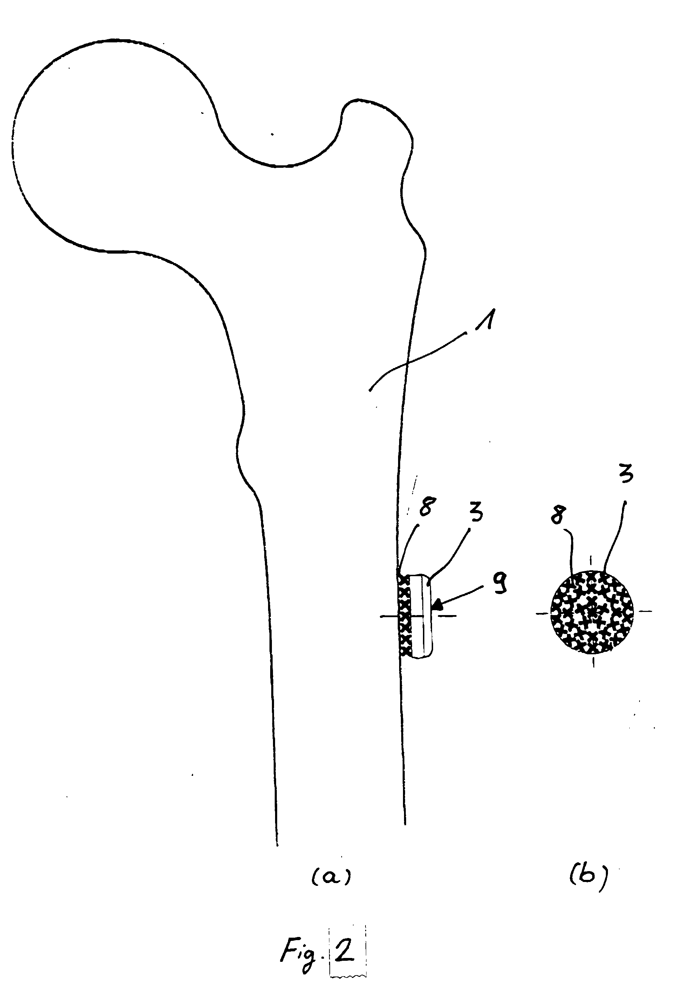

Figur 2 veranschaulicht eine Codeträgereinheit 2, wie diese an einem Röhrenknochen 1 anwächst. Zu diesem Zweck ist die Codeträgereinheit 3 bei diesem Lösungsvorschlag auf ihrer Unterseite mit einer Schicht 8 bedeckt, die Hinterschnitte und vorliegende Maschen ausbildet. Dies wird besonders deutlich anhand der Figur 3b, in welcher die Unteransicht der Codeträgereinheit 3 dargestellt ist. Die Codeträgereinheit 3 besteht im wesentlichen aus einem flüssigkeitsdichten Behälter 9, innerhalb dessen der eigentliche Chip angeordnet ist.

Von der Kortikalis des Röhrenknochens 1 wachsen nun Knochentrapekel in die Hinterschnitte und Maschen hinein und durch diese hindurch, so daß es zu einer knöchernen Verbindung zwischen der Codeträgereinheit 3 und dem Knochen kommt. Diese Einheit ist praktisch nicht mehr entfernbar und bietet somit höchste Sicherheit gegen Manipulationen.

Mit dem erfindungsgemäßen Identifikationssystem ist eine manipulationssichere und lückenlose Überprüfung eines Kontigentes von Schlachttieren problemlos und vor allem auch kostengünstig möglich. Manipulationen sind, sofern überhaupt möglich, sofort am äußeren Erscheinungsbild des Tieres feststellbar. Bei Aufstellung entsprechender Verhaltensregeln wird ein solches Tier nicht in die menschliche Nahrungskette eingeschleust.

## Patentansprüche

1. Identifikationssystem für Schlachtvieh, umfassend einen elektronischen Codeleser (2) sowie einen elektronischen Codeträger (3), wobei der Codeträger (3) als in den Tierkörper (20) implantierbare Einheit ausgebildet ist und wobei der Codeleser (2) zur Erkennung des im Codeträger (3) abgelegten Codes von extern her die Elektronik des Codeträgers (3) mit elektrischer Energie versorgt, derart, daß dieser auf Aufforderung hin über eine drahtlose Informationsstrecke den abgelegten Code zur weiteren Auswertung und Anzeige an den Codeleser (2) abgibt,
dadurch gekennzeichnet, daß
die Oberfläche der Codeträgers (3) zumindest teilweise mit einer offene Maschen ausbildenden Schicht (8) bedeckt ist.

2. Codeträger als Teil des Identifikationssystems nach Anspruch 1, bei dem die Oberflächenschicht mehrschichtig ausgebildet ist mit in der räumlichen Tiefe abnehmender Maschenweite.

3. Codeträger nach Anspruch 2 aus Kunststoffmaterial, bei dem die Oberflächenschicht mehrschichtig ausgebildet ist, wobei die verschiedenen Schichten unterschiedlich gefärbt sind.

## Claims

1. Identification system for animals for slaughter, comprising an electronic code reader (2) and an electronic code carrier (3), wherein the code carrier (3) is designed as a unit which can be implanted in the animal body (20) and wherein the code reader (2) supplies the electronic system of the code carrier (3) with electrical energy externally to recognise the code stored in the code carrier (3), such that the latter emits the stored code for further evaluation and display on the code reader (2) on request via a cordless information path, characterised in that the surface of the code carrier (3) is covered at least partly by a layer (8) forming an open mesh.

2. Code carrier as part of the identification system according to claim 1, in which the surface layer is designed to be multi-layered having mesh width decreasing in the spatial depth.

3. Code carrier according to claim 2 made from plastic material, in which the surface layer is designed to be multi-layered, wherein the different layers have different colours.

## Revendications

1. Système d'identification pour bêtes d'abattoir, comprenant un lecteur de code électronique (2), ainsi qu'un support de code électronique (3), le support de code (3) étant conçu en forme de dispositif à implanter dans le corps de la bête (20) et le lecteur de code (2), destiné à identifier le code stocké dans le support de code (3), étant chargé d'alimenter en énergie électrique, à partir de l'extérieur, le système électronique du support de code (3), de telle sorte que celui-ci puisse émettre à la demande le code stocké, par l'intermédiaire d'une voie de transmission sans fil, vers le lecteur de code (2) destiné à analyser et afficher ledit code, caractérisé en ce que la surface du support de code (3) est revêtue au moins en partie d'une couche (8) formant des mailles ouvertes.

2. Support de code, formant une partie du système d'identification selon la revendication 1, dans lequel la surface est formée par plusieurs couches dont la largeur des mailles diminue en allant dans le sens de la profondeur.

3. Support de code selon la revendication 2, réalisé en matière plastique, dans lequel la surface est formée par plusieurs couches, les différentes couches étant teintes dans des couleurs différentes.
